# EUROPEAN PATENT APPLICATION

(11) **EP 2 033 907 A1**
(43) Date of publication of application: **11.03.2009**
(21) Application number: 08386020.5
(22) Date of filing: 27.08.2008
(51) Int. Cl.: B65D 51/24, C12G 1/08

(54) **Sampling and removing sediment cap for liquid's bottles**

(30) Priority: 30.08.2007 GR 20070100552
(71) Applicant: Rouvas, Spyridon, Kerkyra (GR)
(72) Inventor: Rouvas, Spyridon, Kerkyra (GR)

(57) **Abstract**

A sampling cap and sediment remover for bottles of liquid allowing sampling from the bottle without opening it consists of three parts (Drawing 1,2,3,4) connected in series.
The first part (Drawing 1,2,3,4 part 1) is connected in series or at the second part (Drawing 1,2 part 2) or directly at the third part (Drawing 1,2,3,4 part 3). The second part is inserted between the first and the third piece when it is appropriate to allow the sampling or the removing of the sediment. It have cap form, apply at the entrance of the bottle's inlet but is hollow inside (cup form) and from its inside extends an axis which hold the third piece.
The connection is achieved either by thread or any other way of fast join.
With the bottle upside down, any sediment settle inside the second piece.

## Description

The sampling and removing sediment cap for liquid's bottles is an innovation for it's property to allow the sampling from the bottle or to add ingredient in a bottle without open it.

The caps of bottles are commonly known. They are manufactured from either plastic or cork or other flexible material and must be removed to take the sample from inside the bottle.
Also in many fluids also shows the creation of sediment which cannot be removed if do not transfuse the liquid. In many liquids contain volatile substances the transfusion alter their characteristics. (e.g. Carbonated beverages).

The innovation is a bottle cap made from any material that could be manufactured a cap. Applicable to the common ways of implementing in bottles and caps with the usual appliances.

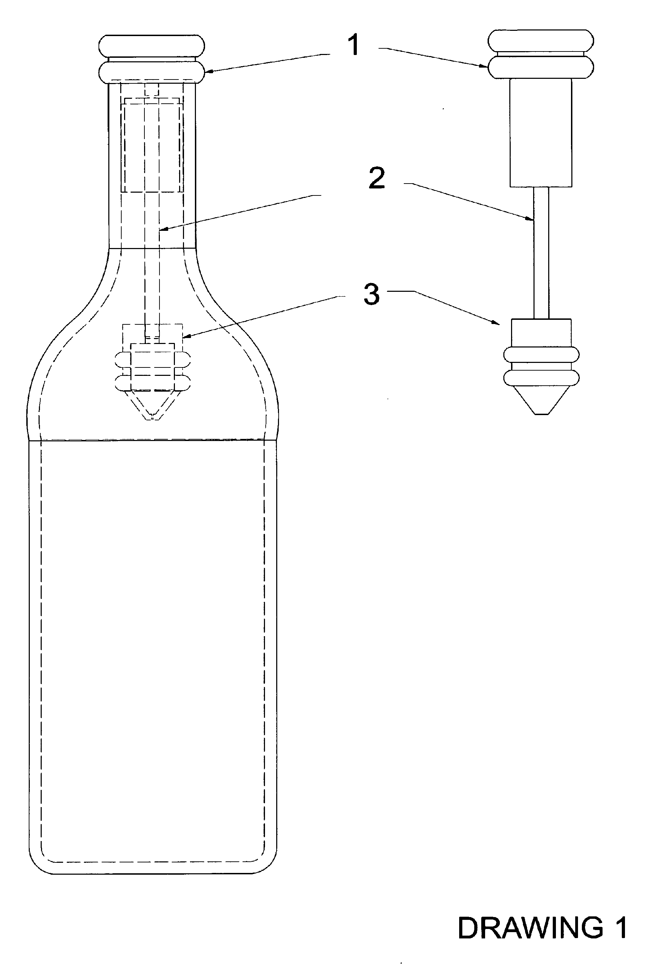

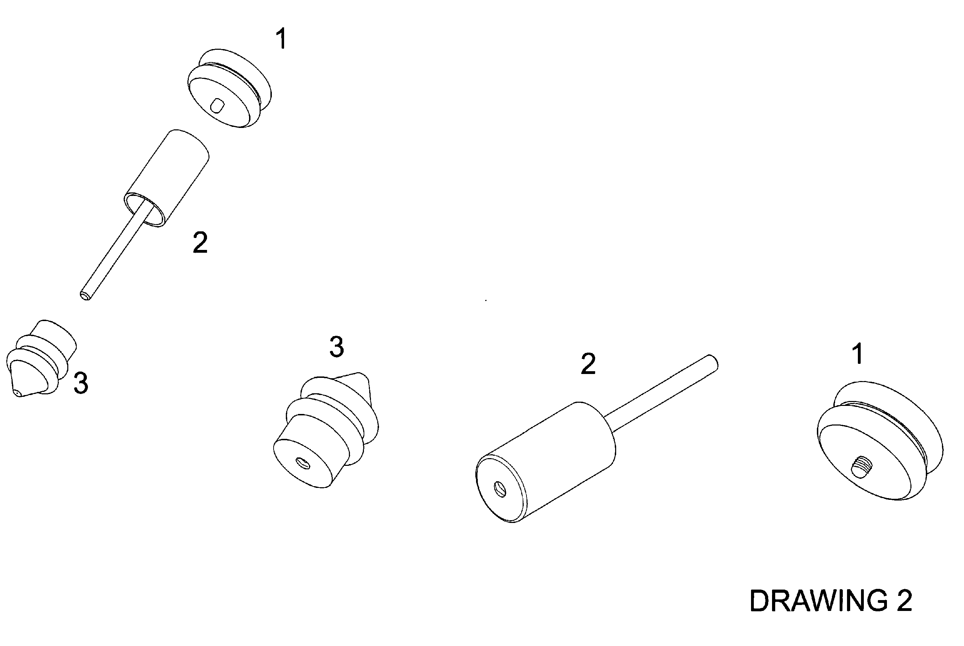

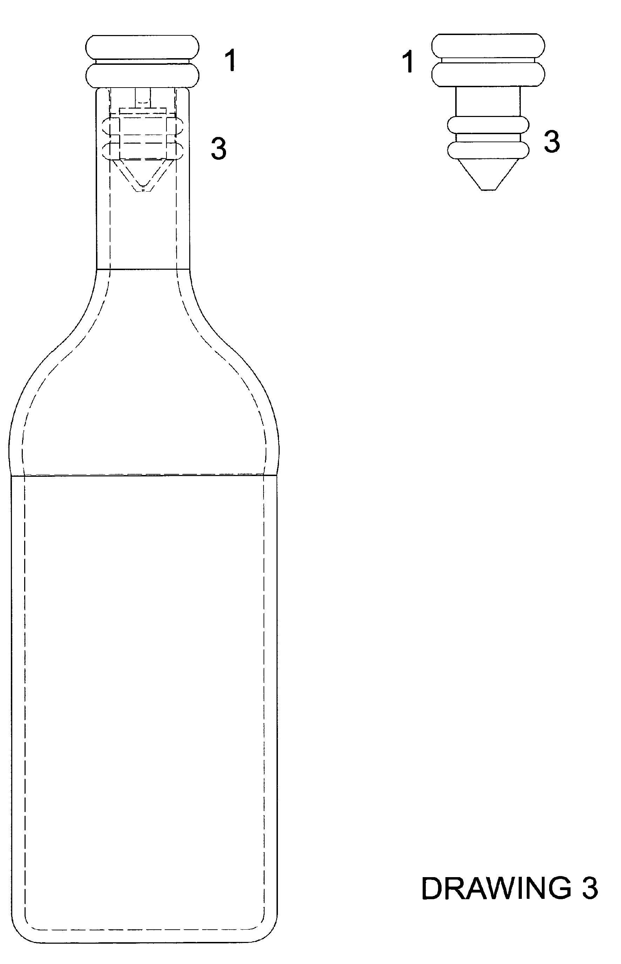

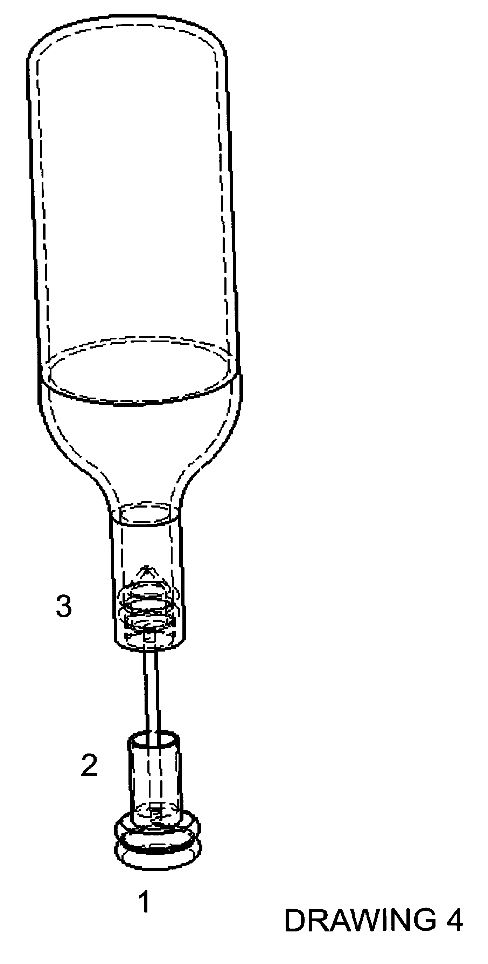

The cap consists of three parts (Drawing 1) connected in series between them.

The first part (Drawing 1, part 2) connected in series to the second (Drawing 1, part 1). The connection is achieved either by thread or any other way of fast join. (eg negative incision and spin).

The second part (Drawing 1, part 1) is inserted between the first and the third piece when it is appropriate to allow the sampling or the removing of the sediment. It have cap form, apply at the entrance of the bottle's inlet but is hollow inside (cup form) and from its inside extends an axis with a coil end which restrains the third piece (Drawing 1, part 3) and this part is the main cap (cork).

At the bottling operation, the third piece passes inside the bottle (Drawing 1) and the second seal the bottle as a common cap. The first serves to remove the cap while excluding the sliding of the cap inside the bottle.

When the bottle is upside down, the sediment settles down in the second piece.

So either to remove sediment, or sampling but also to add ingredients inside the bottle, is enough to be pulled out the cap that the third piece (cork) seals the bottle's inlet again. Now the second piece (Cup) is out of the bottle with the sample or the sediment.

With the bottle upright in the same action not brings out liquid, but can be added to part 2 any ingredient we want to introduce in the bottle. With the bottle upside down, the cup can be filled and then press inside again to seals the bottle again.

After the completion of the process for the content of the bottle parts 1 and 2 can be removed and the part 3 remains as a common cap.

At the drawing 1 is represented a complete cap.

Innovation serves various processes to be taken in bottled liquids. Allows access inside the bottle so that the liquid contained in it do not contacting the ambient air maintaining its characteristics.

Carbonated liquids do not lose the necessary gases (e.g. sparkling wine) by sampling (maturation control) or to remove the sediment.

Sediment that can be created (e.g. olive oil) easily removed without opening the bottle. Add an ingredient in a bottle is also simple.

## Claims

1. Sampling and removing sediment cap for liquid's bottles that που consists of three pieces connected in series between them.

2. The cap referred to in acclaim 1 has concave the middle piece to create a cup to remove or add liquid from/to the bottle.

3. The cap according to acclaim 1 and 2 can be made from any material manufactured the common bottle caps.

4. The first two pieces in accordance with all previous acclaims linked together by any mechanical means of connection.
